# EUROPÄISCHE PATENTSCHRIFT

(11) **EP 0 468 159 B1**
(45) Veröffentlichungstag und Bekanntmachung des Hinweises auf die Patenterteilung: **22.06.1994**
(21) Anmeldenummer: 91108313.7
(22) Anmeldetag: 23.05.1991
(51) Int. Cl.: G01G 23/01

(54) **Elektronische Waage**
Electronic balance
Balance électronique

(30) Priorität: 27.07.1990 CH 2495/90
(43) Veröffentlichungstag der Anmeldung: 29.01.1992
(73) Patentinhaber: Mettler-Toledo AG, 8606 Greifensee (CH)
(72) Erfinder: Leisinger, Roger, CH-8050 Zürich (CH)

(56) Entgegenhaltungen:
- DE-U- 8 438 006
- DE-U- 8 715 016
- DE-U- 8 910 324
- US-A- 4 425 975

## Beschreibung

Gegenstand der vorliegenden Erfindung ist eine elektronische Waage mit einem Lastaufnehmer und einer Kalibriergewichtsanordnung, umfassend eine Hubeinrichtung, mit einer quer zur Hubrichtung verschiebbaren keilförmigen Hubelementanordnung zum Abheben und Absenken eines Kalibriergewichts auf eine Auslegeranordnung am Lastaufnehmer, sowie einem zwischen Hubelementanordnung und Kalibriergewicht angeordneten Kalibriergewichtsträger.

Bei hochauflösenden elektronischen Waagen ist von Zeit zu Zeit ein Vergleich zwischen einem Referenz- oder Kalibriergewicht und dem von der Waage aus einem Messignal errechneten, angezeigten Gewicht notwendig. Es ist dabei üblich, ein bekanntes Referenzgewicht am Waagschalenträger aufzulegen und den Vergleich vorzunehmen. Vorrichtungen zum Auflegen eines Referenzgewichtes sind aus dem Stand der Technik bekannt. Aus dem US-Patent 4,425,975 ist eine Vorrichtung zum Auflegen eines Kalibriergewichtes bekannt, bei der ein U-förmig ausgebildetes Kalibriergewicht, dessen Schenkel den Waagschalenträger beidseitig umfassen, auf einem aus Federstahl gefertigten einseitig befestigten Kalibriergewichtsträger aufliegt. Der Kalibriergewichtsträger ist an seinem unteren Ende fest mit dem Waagengestell verbunden. Sein freies Ende kann durch einen mittels einer Gewindespindel verschiebbaren Keil angehoben und abgesenkt werden. In angehobener Position befindet sich das Kalibriergewicht ausser Eingriff mit dem Waagschalenträger. Wird der Keil zurückgezogen, so kommt das Kalibriergewicht in Auflage mit am Waagschalenträger angebrachten Auflagern und der Kalibriergewichtsträger wird weiter nach unten abgesenkt, so dass das Kalibriergewicht frei am Waagschalenträger aufliegen kann. Mit dieser bekannten Vorrichtung kann das Kalibriergewicht in einfacher Weise für eine Kalibrierung aufgelegt und wieder abgehoben werden.

Der vorliegenden Erfindung liegt die Aufgabe zugrunde, eine Kalibriergewichtsanordnung zu schaffen, welche als unabhängige Einheit herstellbar und in verschiedenen Waagentypen einbaubar ist. Ein dem jeweiligen Wägebereich angepasstes Kalibriergewicht soll in einfacher Weise zuvor in die Anordnung eingesetzt werden können.

Gelöst wird diese Aufgabe durch eine Kalibriergewichtsanordnung, welche sich dadurch kennzeichnet, dass der Kalibriergewichtsträger auf zwei spiegelsymmetrisch angeordneten, keilförmigen Hubelementen aufliegt und die beiden Hubelemente mit einer Spindel mit gegenläufigen Gewindeabschnitten relativ zueinander verschiebbar sind.

Es gelingt dank der spiegelsystemmetrischen Auflage der Hubelemente, am Kalibriergewichtsträger das Kalibriergewicht einerseits zur Kalibrierung exakt am Lastaufnehmer zu positionieren und andererseits während des Nichtgebrauchs und insbesondere beim Transport der Waage sicher zu halten.
Die Kalibriergewichtsanordnung kann als autonome, in einem Gehäuse untergebrachte Einheit hergestellt werden und lässt sich in unterschiedliche Waagentypen und -grössen einbauen.
Die U-förmige Ausbildung des Kalibriergewichtsträgers erlaubt eine kostengünstige Herstellung desselben und bietet einen sicheren Halt für das Kalibriergewicht in den V- oder bogenförmigen Ausnehmungen. Je nach der Höhe des für den Einbau zur Verfügung stehenden Raumes weist der Kalibriergewichtsträger nach oben oder nach unten gerichtete Schenkel auf.
Die schlitzförmige Ausnehmung im Kalibriergewichtsträger erlaubt eine direkte Längsführung der Hubelemente an seinem Basisschenkel und eine kostengünstige Herstellung, da dadurch geringe Ansprüche an die Bearbeitungstoleranz des die Anordnung aufnehmenden Gehäuses gestellt werden müssen. Durch die Verwendung des Bodens des Gehäuses als Gleitfläche für die Hubelemente werden weniger Teile und folglich weniger Montagezeit benötigt.

Anhand illustrierter Ausführungsbeispiele wird die Erfindung näher erläutert. Es zeigen:
- Figur 1: eine schematische Darstellung einer Waage,
- Figur 2: einen Querschnitt durch eine erste Ausführungsform einer Hubeinrichtung,
- Figur 3: eine perspektivische Darstellung der Hubeinrichtung in Figur 2 (ausschnittsweise),
- Figur 4: eine weitere Ausführungsform des Hubelementes,
- Figur 5: einen Querschitt durch eine weitere Ausführungsform des Hubelementes und
- Figur 6: einen Querschnitt durch eine Hubeinrichtung (untenliegend).

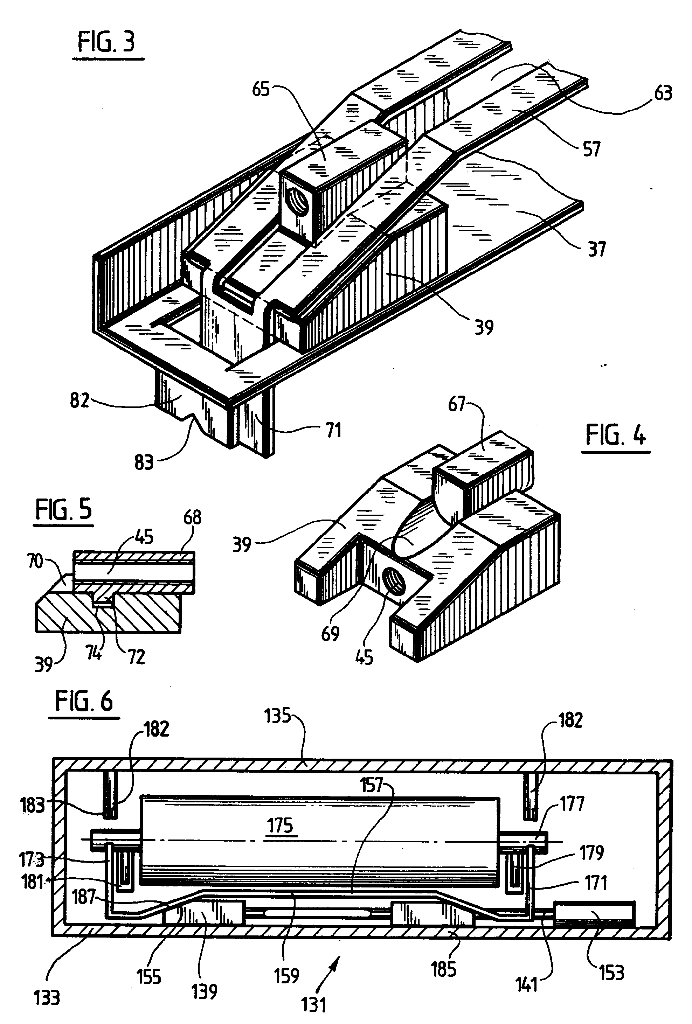

Das strichpunktiert angedeutete Waagengehäuse 1 umschliesst den Wägeraum 3, das die Bedienungselemente aufnehmende Tastaturfeld 5 und einen Raum 7 zur Aufnahme eines Grossteils der Wägemechanik und -elektronik.
Im Waagengestell (pauschal mit 9 bezeichnet) ist über Lenker 11 und Lager 13 ein Lastaufnehmer 15 parallel geführt. Ein Uebersetzungshebel (Waagbalken) 17 ist über ein Biegelager 19 an einer Konsole 21 schwenkbar aufgehängt. An seinem Ende ist er über ein Biegelager 23 an den Lastaufnehmer 15 gekoppelt. Nahe an seinem anderen Ende verfügt er über eine Tauchspule 25, welche in ein ortsfestes Permanentmagnetsystem 26 bekannter Art eintaucht, welches in gebrochenen Linien dargestellt ist. Eine Fahne 27 symbolisiert eine konventionelle Positionsabtastung. Die Waagschale 28 ist auf einem sich horizontal vom Lastaufnehmer 15 erstreckenden Waagschalenträger 29 aufgesetzt.
Selbstverständlich könnte die Waagschale 28 auch direkt auf dem Lastaufnehmer 15 aufgesetzt sein und die Kalibriergewichtsanordnung 31 direkt seitlich des Lastaufnehmers 15 liegen.
Unterhalb der Waagschale 28 ist schematisch ein als Einheit in die Waage einsetzbares Gehäuse 33 dargestellt, das eine Kalibriergewichtsanordnung 31 aufnimmt.
Das Gehäuse 33 weist oben eine Abdeckung 35 auf. Auf einem Zwischenboden 37 im Gehäuse 33 sind zwei symmetrisch angeordnete keilförmige Hubelemente 39 angeordnet und durch eine Gewindespindel 41 miteinander verbunden. Die Spindel 41 weist zwei gegenläufige Gewindeabschnitte 43 auf, welche in entsprechenden Gewindebohrungen 45 in den Hubelementen 39 geführt sind. Auf dem Ende der Spindel 41 sitzt ein Kegelrad 47, das mit einem zweiten Kegelrad 49 auf der Abtriebswelle 51 eines Antriebsmotors 53 kämmt. Anstelle eines Kegelradgetriebes könnte selbstverständlich auch ein Schneckengetriebe treten oder die Spindel 41 könnte direkt durch den Motor 53 angetrieben sein.
Die geneigt zur Horizontalen liegenden Keilflächen 55 der Hubelemente 39 liegen an der Unterseite eines U-förmigen Kalibriergewichtsträgers, kurz Bügel 57, an. Der Bügel 57 weist an seinem Basisschenkel 59 zwei Abschnitte 61 auf, welche den gleichen Neigungswinkel zur Horizontalen aufweisen wie die Keilflächen 55 der Hubelemente 39.
Im Bügel 57 ist eine schlitzförmige Ausnehmung 63 angebracht, in die ein zentraler, nicht keilförmig ausgebildeter Abschnitt 65 des Hubelementes 39 eingreift und seitlich geführt ist (Figur 3).
Das Hubelement 39 kann auch ohne den Abschnitt 65 ausgebildet sein, wenn am Bügel 57 eine Führungsschiene 67 befestigt ist, welche in eine Nut 69 am Hubelement 39 eingreift (Figur 4).
In der Ausführungsform des Hubelementes nach Figur 5 ist ein in der schlitzförmigen Ausnehmung 63 am Bügel 57 geführtes Mitnehmerelement 68 in eine Nut 70 am Hubelement 39 eingesetzt und mit diesem durch eine Mitnehmernocken 72 verbunden. Der Mitnehmernocken 72 greift in eine Vertiefung 74 in der Nut 70 am Hubelement 39 ein.

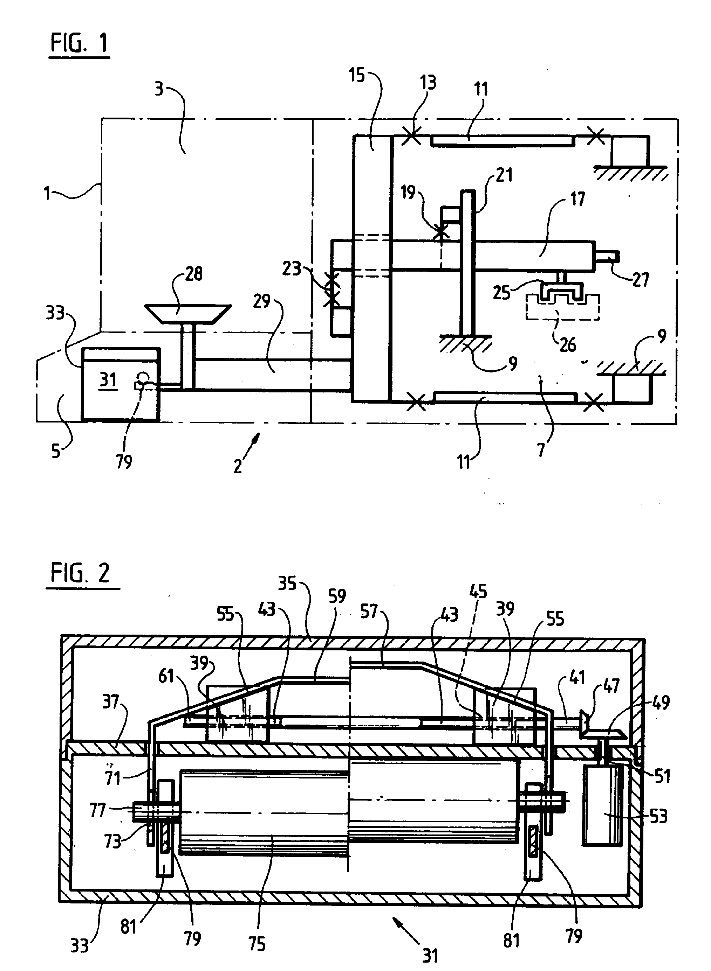

Die beiden Schenkel 71 des Bügels 57 durchdringen den Zwischenboden 37 und weisen je eine schlitzförmige Ausnehmung 73 auf, in welche je ein das Ende eines Kalibriergewichtes 75 überragender Zapfen 77 eingreift (Figur 2). Das Kalibriergewicht 75 kann einen zylindrischen oder mehreckigen Querschnitt aufweisen.
Zwischen die beiden Schenkel 71 des Bügels 57 und die Enden des Kalibriergewichtes 75 ragen je ein Ausleger 79, welche am Lastaufnehmer 15 oder am Waagschalenträger 29 befestigt sind. Die beiden Ausleger 79 dringen durch die Ausnehmungen 81 in das Gehäuse 33 ein.
Es ist selbstverständlich auch möglich, das Gehäuse 33 wegzulassen und die Kalibriergewichtsanordnung 31 und den Zwischenboden 37 nur auf einer Abstützplatte zu befestigen (keine Abbildung).

Bei der Durchführung einer Kalibrierung der Waage werden durch Drehen der Spindel 41 die beiden Hubelemente 39 aus der in Figur 2 auf der rechten Seite der Abbildung dargestellten oberen Lage gegeneinander verschoben. Dadurch senkt sich der Bügel 57 parallel zum Zwischenboden 37 nach unten und das am Bügel 57 hängende Kalibriergewicht 75, welches in der Ruhestellung am Zwischenboden 37 anliegt, wird abgesenkt. Beim Absenken des Kalibriergewichts 75 werden die Zapfen 77 auf die Enden der Ausleger 79 aufgelegt und lösen sich etwa gleichzeitig von der Auflage in der Ausnehmung 73 an den Schenkeln 71 des Bügels 57, wie aus der Darstellung auf der linken Seite in Figur 2 ersichtlich ist.
Nach durchgeführter Kalibrierung kann das Kalibriergewicht 75 durch Drehen der Spindel 41 in entgegengesetzter Drehrichtung wieder vom Ausleger 79 abgehoben und in die Ruheposition zwischen der Auflage in der Ausnehmung 73 am Bügel 57 und dem Zwischenboden 37 eingeklemmt werden.

Anstelle einer Anlage des Kalibriergewichtes 75 am Zwischenboden 37 kann über den beiden Zapfen 77 am Zwischenboden 37 eine Stützplatte 82 angebracht sein, an welcher unten eine keil- oder bogenförmige Einbuchtung 83 zur Abstützung des Zapfens 77 vorgesehen ist (Figur 3).

In einer weiteren Ausgestaltung der Erfindung gemäss Figur 6 sind die beiden Hubelemente 139 am Boden 185 des Gehäuses 133 abgestützt. Die Schenkel 171 des Bügels 157 sind nach oben gerichtet und der Basisschenkel 159 weist auf der Aussenseite entsprechend den Keilflächen 155 der Hubelemente 139 geneigte Abschnitte 187 auf, welche in Anlage mit den Hubelementen 139 stehen. Die beiden Zapfen 177 des Kalibriergewichtes 175 können entweder, wie im Beispiel nach Figur 2, in entsprechende Ausnehmungen eingreifen oder entsprechend Figur 5 nur auf den oberen Enden der Schenkel 171 aufliegen. An den Enden sind dazu vorzugsweise V- oder bogenförmige Ausnehmungen 173 angebracht.

Für eine Kalibrierung werden die beiden Hubelemente 139 durch die Spindel 141 gegeneinander verschoben und dadurch der Bügel 157 abgesenkt, so dass die Zapfen 177 in Anlage mit den Auslegern 179 gelangen. Während des Transportes und während des Wägens befinden sich die beiden Hubelemente 139 in grossem gegenseitigem Abstand und drücken das Kalibriergewicht entweder gegen die obere Abdeckung 135 oder - sofern vorhanden - gegen entsprechende, vorzugsweise mit Ausnehmungen 183 versehene Abstützplatten 182, die an der Abdeckung 135 befestigt sind.

Das Gehäuse 133 kann mit Schrauben am Gehäuse 1 oder am Waagengestell 9 befestigt sein.

## Patentansprüche

1. Elektronische Waage mit einem Lastaufnehmer (15,29) und einer Kalibriergewichtsanordnung (31), umfassend eine Hubeinrichtung, mit einer quer zur Hubrichtung verschiebbaren keilförmigen Hubelementanordnung (39, 139) zum Abheben und Absenken eines Kalibriergewichts auf eine Auslegeranordnung (79, 179) am Lastaufnehmer, sowie einem zwischen Hubelementanordnung und Kalibriergewicht (75, 175) angeordneten Kalibriergewichtsträger (57, 157), dadurch gekennzeichnet, dass der Kalibriergewichtsträger (57, 157) auf zwei spiegelsymmetrisch angeordneten, keilförmigen Hubelementen (39, 139) aufliegt und die beiden Hubelemente (39, 139) mit einer Spindel (41, 141) mit gegenläufigen Gewindeabschnitten (45) relativ zueinander verschiebbar sind.

2. Waage nach Anspruch 1, dadurch gekennzeichnet, dass die Kalibriergewichtsanordnung (31,131) in einem eigenen Gehäuse (33,133) untergebracht ist.

3. Waage nach Anspruch 1 oder 2, dadurch gekennzeichnet, dass der Kalibriergewichtsträger (57,157) U-förmig ausgebildet ist und dessen die Basis bildender Schenkel (59,159) zwei zur Horizontalen geneigte Gleitflächen (55,155) aufweist, und dass an den beiden im wesentlichen vertikal liegenden Schenkeln (71,171) des Kalibriergewichtsträ- gers (57,157) Mittel zur Auflage des Kalibriergewichtes (75,175) vorgesehen sind.

4. Waage nach Anspruch 3, dadurch gekennzeichnet, dass die Mittel zur Auflage des Kalibriergewichtes (75,175) aus V- oder bogenförmigen Ausnehmungen (73,173) bestehen.

5. Waage nach Anspruch 3, dadurch gekennzeichnet, dass die Schenkel (71) nach unten gerichtet und die Gleitflächen (55) zwischen den Schenkeln (71) liegen, oder dass die Schenkel (171) nach oben gerichtet und die Gleitflächen (187) auf der Aussenseite des Basisschenkels (157) angeordnet sind.

6. Waage nach einem der Ansprüche 3 bis 5, dadurch gekennzeichnet, dass im Basisschenkel (59) des Kalibriergewichtsträgers (57) eine schlitzförmige Ausnehmung (63) zur Längsführung der Hubelemente (39) angebracht ist.

7. Waage nach Anspruch 6, dadurch gekennzeichnet, dass an den Hubelementen (39,139) ein Führungselement (65) ausgebildet ist, das in die Ausnehmung (63) am Kalibriergewichsträger (57) eingreift, oder dass im Hubelement (39,139) eine Nut (69) eingelassen ist, in welcher eine Führungsschiene (67) geführt ist, die am Kalibriergewichtsträger (57,157) befestigt ist, oder dass im Hubelement (39,139) eine Nut (70) eingelassen ist, in welcher ein Mitnehmerelement (68) geführt und durch einen Mitnehmernocken (72), die in eine Vertiefung (74) am Hubelement (39,139) eingreift, gehalten ist.

8. Waage nach einem der Ansprüche 2 bis 7, dadurch gekennzeichnet, dass die Hubelemente (39,139) direkt auf dem Boden (185) des Gehäuses (33,133) gleitend abgestützt sind.

9. Waage nach einem der Ansprüche 3 bis 8, dadurch gekennzeichnet, dass am Zwischenboden (37) oder an der Abdeckung (135) des Gehäuses (33,133) je eine seitlich der Schenkel (71,171) des Kalibriergewichtsträgers (57,157) angeordnete, mit einer Zentriereinbuchtung (83,183) versehene, nach unten gerichtete Abstützplatte (82,182) angebracht ist.

10. Waage nach einem der Ansprüche 2 bis 9, dadurch gekennzeichnet, dass im Gehäuse (33,133) Ausnehmungen (81,181) zum Einführen von am Lastaufnehmer (15) befestigten Auslegern (79,179) vorgesehen sind.

## Claims

1. An electronic balance having a load-receiving means (15, 29) and a calibration weight arrangement (31) including a lift means with a wedge-shaped lift element arrangement (39, 139) that is displaceable transversely to the lift direction for raising and lowering a calibration weight on to an arm arrangement (79, 179) on the load-receiving means, and a calibration weight carrier (57, 157) arranged between the lift element arrangement and the calibration weight (75, 175), characterised in that the calibration weight carrier (57, 157) lies on two wedge-shaped lift elements (39, 139) which are arranged in mirror-image symmetrical relationship and the two lift elements (39, 139) are displaceable relative to each other by a spindle (41, 141) with screwthread portions (45) of opposite hands.

2. A balance according to claim 1 characterised in that the calibration weight arrangement (31, 131) is disposed in its own housing (33, 133).

3. A balance according to claim 1 or claim 2 characterised in that the calibration weight carrier (57, 157) is of a U-shaped configuration and its limb (59, 159) which forms the base has two sliding surfaces (55, 155) which are inclined relative to the horizontal, and that provided on the two substantially vertically disposed limbs (71, 171) of the calibration weight carrier (57, 157) are means for supporting the calibration weight (75, 175).

4. A balance according to claim 3 characterised in that the means for supporting the calibration weight (75, 175) comprise V-shaped or arcuate openings (73, 173).

5. A balance according to claim 3 characterised in that the limbs (71) are directed downwardly and the sliding surfaces (55) lie between the limbs (71), or that the limbs (171) are directed upwardly and the sliding surfaces (187) are arranged on the outside of the base limb (157).

6. A balance according to one of claims 3 to 5 characterised in that provided in the base limb (59) of the calibration weight carrier (57) is a slot-shaped opening (63) for longitudinally guiding the lift elements (39).

7. A balance according to claim 6 characterised in that provided on the lift elements (39, 139) is a guide element (65) which engages into the opening (63) on the calibration weight carrier (57), or that let into the lift element (39, 139) is a groove (69) in which a guide rail (67) which is fixed to the calibration weight carrier (57, 157) is guided, or that let into the lift element (39, 139) is a groove (70) in which an entrainment element (68) is guided and held by an entrainment projection (72) which engages into a recess (74) on the lift element (39, 139).

8. A balance according to one of claims 2 to 7 characterised in that the lift elements (39, 139) are slidingly supported directly on the floor (185) of the housing (33, 133).

9. A balance according to one of claims 3 to 8 characterised in that mounted on the horizontal partition (37) or the cover portion (135) of the housing (33, 133) is a respective downwardly directed support plate (82, 182) which is arranged laterally of the respective limbs (71, 171) of the calibration weight carrier (57, 157) and which is provided with a centering recess (83, 183).

10. A balance according to one of claims 2 to 9 characterised in that provided in the housing (33, 133) are openings (81, 181) for the introduction of arms (79, 179) which are fixed to the load-receiving means (15).

## Revendications

1. Balance électronique comprenant un moyen récepteur de charge (15, 29) et un agencement à poids de calibrage (31) qui est constitué d'un dispositif de levage comprenant un agencement formant élément de levage (39, 139) en forme de coin, qui peut se déplacer transversalement à la direction de levage et qui sert à lever et abaisser un poids de calibrage sur un agencement à bras (79, 179) fixé au moyen récepteur de charge, ainsi qu'un support de poids de calibrage (57, 157) disposé entre l'agencement formant élément de levage et le poids de calibrage (75, 175), caractérisée en ce que le support de poids de calibrage (57, 157) repose sur deux éléments de levage (39, 139) en forme de coins disposés selon une symétrie spéculaire et les deux éléments de levage (39, 139) peuvent être déplacés l'un par rapport à l'autre à l'aide d'une broche (41, 141) comportant des segments filetés en sens opposés (45).

2. Balance selon la revendication 1, caractérisée en ce que l'agencement à poids de calibrage (31, 131) est logé dans un boîtier distinct (33, 133).

3. Balance selon la revendication 1 ou 2, caractérisée en ce que le support de poids de calibrage (57, 157) est conçu en forme de U et sa branche (59, 159) formant la base comporte deux surfaces de glissement (55, 155) inclinées par rapport à l'horizontale, et en ce qu'il est prévu, sur les deux branches (71, 171) sensiblement verticales du support de poids de calibrage (57, 157), des moyens pour supporter le poids de calibrage (75, 175).

4. Balance selon la revendication 3, caractérisée en ce que les moyens pour supporter le poids de calibrage (75, 175) sont constitués par des évidements (73, 173) en forme de V ou d'arc.

5. Balance selon la revendication 3, caractérisée en ce que les branches (71) sont orientées vers le bas et les surfaces de glissement (55) se trouvent entre les branches (71), ou en ce que les branches (171) sont orientées vers le haut et les surfaces de glissement (187) sont disposées sur le côté extérieur de la branche de base (157).

6. Balance selon l'une des revendications 3 à 5, caractérisée en ce qu'un évidement (63) en forme de fente est pratiqué dans la branche de base (59) du support de poids de calibrage (57) pour le guidage longitudinal des éléments de levage (39).

7. Balance selon la revendication 6, caractérisée en ce que, sur les éléments de levage (39, 139) est disposé un élément de guidage (65) qui s'engage dans l'évidement (63) du support de poids de calibrage (57), ou en ce que, dans l'élément de levage (39, 139) est pratiquée une rainure (69), dans laquelle est guidé un rail de guidage (67) qui est fixé au support de poids de calibrage (57, 157), ou en ce que, dans l'élément de levage (39, 139) est pratiquée une rainure (70) dans laquelle un élément d'entraînement (68) est guidé et retenu par un ergot d'entraînement (72) qui s'engage dans un renfoncement (74) de l'élément de levage (39, 139).

8. Balance selon l'une des revendications 2 à 7, caractérisée en ce que les éléments de levage (39, 139) prennent directement appui, de manière glissante, sur le fond (185) du boîtier (33, 133).

9. Balance selon l'une des revendications 3 à 8, caractérisée en ce qu'une plaque d'appui (82, 182) orientée vers le bas, munie d'une encoche de centrage (83, 183) et disposée sur le côté de chacune des branches (71, 171) du support de poids de calibrage (57, 157), est montée sur le fond intermédiaire (37) ou sur le couvercle (135) du boîtier (33, 133).

10. Balance selon l'une des revendications 2 à 9, caractérisée en ce que des évidements (81, 181) sont prévus dans le boîtier (33, 133) pour faire passer des bras (79, 179) fixés au moyen récepteur de charge (15).
